# EUROPEAN PATENT SPECIFICATION

(11) **EP 0 677 145 B1**
(45) Date of publication and mention of the grant of the patent: **18.09.1996**
(21) Application number: 92923344.3
(22) Date of filing: 27.04.1992
(51) Int. Cl.: F02C 7/20

(54) **SEPARABLE FAN STRUT FOR A GAS TURBOFAN POWERPLANT**
TEILBARE STREBE FUER EIN BLAESERTRIEBWERKSGEHAEUSE
MONTANT DE VENTILATEUR DEMONTABLE POUR GROUPE MOTOPROPULSEUR D'UN TURBOREACTEUR A DOUBLE FLUX A GAZ

(30) Priority: 08.05.1991 US 696885; 06.01.1992 US 817195
(43) Date of publication of application: 18.10.1995
(73) Proprietor: UNITED TECHNOLOGIES CORPORATION, Hartford, CT 06101 (US)
(72) Inventor: MUNROE, Alan, D., Glastonbury, CT 06033 (US); BLUME, Karl, D., Rocky Hill, CT 06067 (US); GURNEY, Robert, E., Hampden, MA 01036 (US); ECKFELDT, Grant, Colchester, CT 06415 (US); WEISSE, Michael, A., Windsor Locks, CT 06096 (US); KASPROW, Robert, F., Wethersfield, CT 06109 (US); DEMBECK, Kurt, M., Vernon, CT 06066 (US)
(74) Representative: Klunker . Schmitt-Nilson . Hirsch
(86) International application number: US9203417
(87) International publication number: WO9219854

(56) References cited:
- FR-A- 1 539 222
- US-A- 3 398 535
- US-A- 4 790 137

## Description

### Technical Field

This invention relates to gas turbofan engines, and, more particularly, to an apparatus and method to separate a gas turbofan engine into modules.

### Background Art

An aircraft includes an airframe having a powerplant which provides thrust for the aircraft. For large aircraft a common type of powerplant is a gas turbofan engine. The gas turbofan engine includes an engine core and a fan section. The engine core is disposed on the airframe and has a primary flowpath. The fan section is disposed coaxial with and radially outward of the engine core and has a secondary flowpath. A fan cowling envelops the fan section and outwardly bounds the secondary flowpath.

Modern aircraft, and the gas turbofan engines used to power them, are being required to produce increasing amounts of thrust. A consequence of this increased thrust production is an increase in the radial and axial dimensions of the turbofan engine. The radial dimension is generally determined by the fan section and the axial dimension is generally determined by the engine core. The size of the modern turbofan engines has made it more difficult, if not impossible, to ship the engine as a single unit. In addition, the size of the engine makes maintenance and repair work more complex and difficult.

An area of concern with the large gas turbofan engines is the structural mounting of the fan cowling to the engine core. The mounting structure is required to transfer all the operational loads on the fan cowling, such as structural, thrust and aerodynamic loads, to the engine core and thence to the airframe. At the same time, the mounting structure is required to maintain the concentric alignment of the fan cowling and engine core.

One such mounting structure is disclosed in U.S. Patent No. 3,398,535, entitled "Engine Supporting Structure", issued to Campbell. Campbell discloses mounting structure having a plurality of struts interconnecting an inner ring mounted on the engine core, a mid-span ring, and an outer ring mounted on the fan cowling. The mid-span ring provides increased structural rigidity to the mounting structure. In addition, a plurality of V-struts connect the mid-span ring with points axially downstream on the engine wall in order to transmit axial loads to the engine wall. One drawback to this type of mounting structure is the low efficiency of the load path provided by the multiple rings and V-struts. Another drawback is that the outer casing of the engine core must be stiffened in order to transfer the operational loads to the engine core.

A simple and low cost alternative to the Campbell type mounting structure is a mounting structure having an intermediate case with a plurality of through struts. The through struts are the predominant means to transfer operational loads from the fan cowling to the engine core. Each through strut extends radially from an inner flow surface of the primary flowpath to an outer ring attached to the fan cowling. The through struts provide a simple and efficient load path for the transfer of the operational loads from the fan cowling to the engine core.

A drawback to the through strut concept is the difficulty of separating a powerplant of this type into separate modules for shipping. One solution to this problem was disclosed in U.S. Patent 4,744,214, issued to Monsarrat et al and assigned to Applicants' Assignee, entitled "Engine Modularity". Monsarrat et al discloses structure which permits the turbofan engine to be split into a front portion comprised of the fan cowling, a low pressure compressor, and the intermediate case, and an aft portion comprised of a high pressure compressor and a turbine section. The split occurs by separating a stub shaft from a low pressure rotor shaft, which drives the fan and low pressure compressor, and unbolting the intermediate case from the high pressure compressor.

The above art notwithstanding, scientist and engineers under the direction of Applicants' Assignee are working to develop structure and methods to easily separate gas turbofan type engines into modules for shipping, repair and maintenance.

### Disclosure of Invention

According to the present invention, an improved gas turbofan engine includes a first module, a second module, and a plurality of through struts connecting the modules, each of the struts having an easily disengageable joint which facilitates separation of the modules through diverging relative motion of the two modules along a common longitudinal axis. The first module is comprised of an engine core and an inner portion of the strut. The second module is comprised of a fan cowling and an outer portion of the strut.

According to a specific embodiment of the present invention, each joint includes a complementary pair of mating fixtures having planar mating surfaces which are canted relative to the axis and which, in a disassembled condition, have a radial separation between the mating surfaces. The plurality of canted mating surfaces approximate a pair of complementary conical surfaces. The radial separation between mating surfaces provides a tensile preload to the through struts in an assembled condition.

According to another specific embodiment of the present invention, each joint includes a tongue disposed on the inward portion and a groove disposed on the outward portion.

According further to the alternate embodiment, the tongue includes a radially outward projecting contour and the outward portion includes a furrow, wherein the contour is adapted to nest with the furrow.

According further to the present invention, a method of alternating a gas turbofan powerplant between an assembled condition and a disassembled condition is comprised of the following steps: manipulating the joints between an engaged and disengaged position, and axially moving a first module relative to a second module along a longitudinal centerline.

A principal feature of the present invention is the load bearing, easily disengageable joint between the inner portion and outer portion of the strut. A feature of one specific embodiment is the cant of the mating surfaces which, taken as a plurality, approximates a pair of complementary conical mating surfaces. A further feature of this specific embodiment is the radial separation between the mating surfaces when the joint is in a disassembled condition. A feature of another specific embodiment is the tongue and groove arrangement. A further feature of the alternate embodiment is the nesting relationship of the contour and furrow.

Advantages which result from the use of the bolted joint of the invention is the simplicity of the mounting structure and the ease of assembly/disassembly of the turbofan engine. The through strut provides both structural strength to transfer loads between the fan cowling and engine core and also provides modularity of the turbofan engine. Assembly and disassembly of the gas turbofan powerplant is made easier as a result of the conical mating surfaces because of the clearance between the mating surfaces as the two modules are separated. In one specific embodiment, the assembly and disassembly of the turbofan modules is also made easier because of the clearance provided by the radial separation between the unassembled mating surfaces. In addition, the radial separation introduces a tensile preload into the struts in an assembled condition to enhance the load bearing characteristics of the mounting structure. In another specific embodiment, the assembly and disassembly is made easier as a result of the tongue and groove connection between the strut portions. In a further specific embodiment, alignment of the strut portions results from the nesting of the contour within the furrow.

The foregoing and other objects, features and advantages of the present invention become more apparent in light of the following detailed description of the exemplary embodiments thereof, as illustrated in the accompanying drawings.

### Brief Description of Drawings

FIG. 1 is a sectional view of a gas turbofan powerplant.

FIG. 2 is a side view of a bolted strut joint.

FIG. 3 is a partially cut away view of a strut joint taken along line 3-3 of FIG. 2.

FIG. 4 is a view of a strut joint taken along line 4-4 of FIG. 2.

FIG. 5 is a side view of a strut joint in an unassembled condition and engaged with a pulling tool.

FIG. 6 is a side view of a strut joint in an assembled condition, partially cut away to show a threaded aperture for a jacking bolt.

FIG. 7 is a sectional view similar to FIG. 1, but with the gas turbofan powerplant disassembled to show the separation into modules.

FIG. 8a is an isometric view of the segmented fan case strut of the present invention.

FIG. 8b is an exploded isometric view of the segmented fan case strut.

FIG. 8c is an isometric view of the radially outer end of the inward portion.

FIG. 9 is a partly broken away side view of the assembled fan case strut.

FIG. 10 is a cross-sectional view taken along the lines 10-10 of FIG. 9.

FIG. 11 is a cross-sectional view taken along the lines 11-11 of FIG. 9.

FIG. 12 is a view taken along the lines 12-12 of FIG. 9.

### Best Mode for Carrying Out the Invention

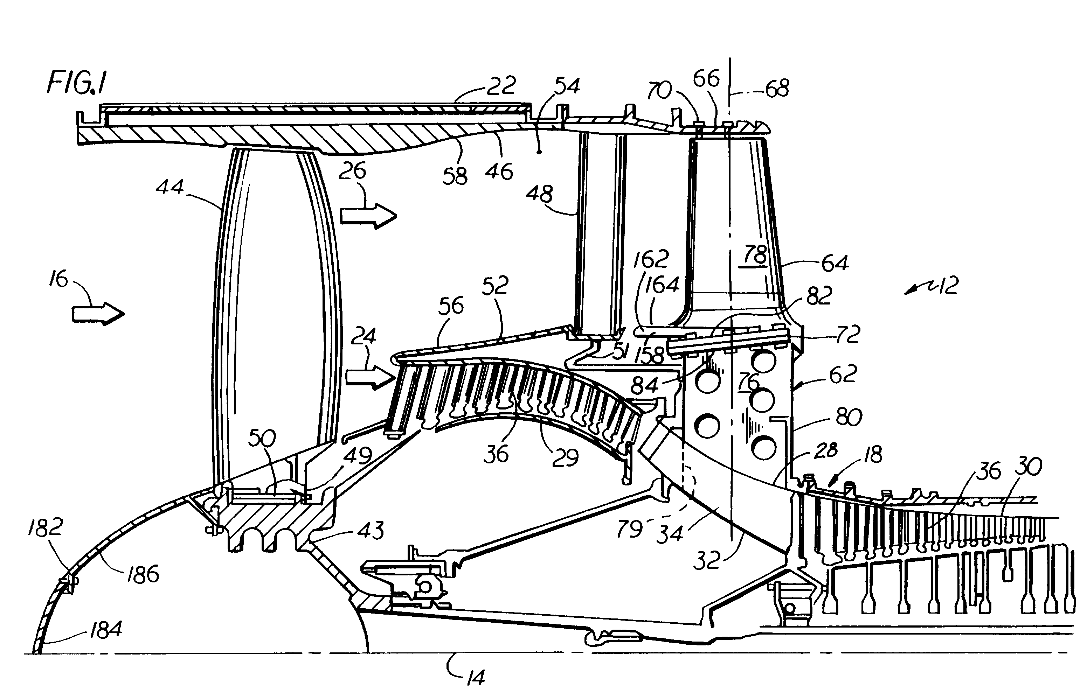

A gas turbofan powerplant 12 in accordance with the present invention is illustrated in FIG. 1. The turbofan powerplant 12 extends about a longitudinally extending centerline 14 and has an axially oriented flowpath 16 for a working fluid. The turbofan powerplant 12 includes an engine core 18 and a fan assembly 22. The flowpath 16 includes a primary flowpath 24 extending through the engine core 18 and a secondary flowpath 26 extending through the fan assembly 22. The ratio of the amount of working fluid flowing through the secondary flowpath 26 relative to the amount of working fluid flowing through the primary flowpath 24 defines a bypass ratio.

The engine core 18 is circumferentially disposed about the centerline 14. The engine core includes an outer case 28, a low pressure compressor 29, and a high pressure compressor 30. An inner platform 32 is spaced radially from the outer case 28 leaving the primary flowpath 24 therebetween.

The fan assembly 22 includes a fan disk 43 and a plurality of fan blades 44 which extend outwardly across the flowpath 16. The fan blades 44 are retained to the disk 43 by engagement of the blades 44 with a retaining groove 49 and a blade pin 50. A fan cowling 46 extends circumferentially about the blades and a plurality of fan exit case guide vanes 48. The fan exit case guide vanes 48 are attached to the fan cowling 46 and to a support cone 51 which is disposed between the engine core 18 and plurality of guide vanes 48. A flow splitter 52 provides a partition between the fan assembly 22 and the low pressure compressor 29. The flow splitter 52 is mounted on the engine core 18 by a plurality of radial bolts 53. The radial separation between the flow splitter 52 and the fan cowling 46 defines a portion of the secondary flow passage 26. The flow splitter 52 provides a radially inner flow surface 56 and the fan cowling 46 provides a radially outer flow surface 58.

An intermediate case 62 is axially located between the low pressure compressor 29 and the high pressure compressor 30 of the engine core 18. The intermediate case 62 structurally connects the fan cowling 46 to the engine core 18. The intermediate case 62 includes a plurality of struts 64 and an outer ring 66. The struts 64 extend from the inner platform 32 of the engine core 18 to the outer ring 66. Each of the struts 64 is hollow to reduce weight and circumferentially continuous about a spanwise axis 68 of the strut 64. The outer ring 66 connects the intermediate case 62 with the fan cowling 46 through a bolted connection 70.

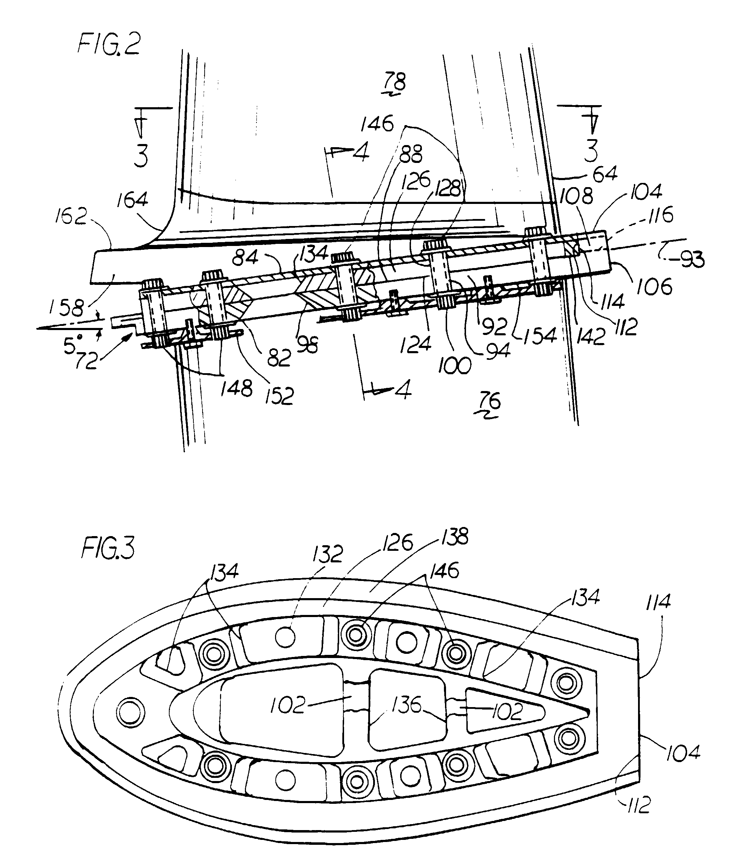

Referring now to FIGs. 2, 3 and 4, each of the struts 64 has a joint 72 radially located near the inner flow surface 56 of the fan assembly 22. The joint 72 separates the strut 64 into an inner portion 76 and an outer portion 78. The inner portion 76 extends radially from the inner platform 32 to the joint 72. The inner portion 76 is comprised of a core portion 79 (see FIG. 1), disposed within the primary flow passage 34 and having an aerodynamic cross-section, and an intermediate portion 80, disposed between the outer case 28 and the joint 72. The outer portion 78 extends radially from the joint 72 to the outer ring 66 and has an aerodynamic cross-section. The joint 72 is comprised of a first mating fixture 82 disposed on the inner portion 76 and a second mating fixture 84 disposed on the outer portion 78. The two mating fixtures 82, 84 are complementary.

The first mating fixture 82 is located on the radially outward end 86 of the inner portion 76. The first mating fixture 82 includes a first mating surface 88 and a joint flange 92 disposed around the perimeter of the outward end 86. The first mating surface 88 defines a plane which is canted relative to the centerline 14 such that the plurality of mating surfaces approximate a radially outwardly facing conical surface. The angle formed between the planar first mating surface 88 and the centerline 14 is five (5) degrees. A canted mating surface is advantageous during assembly to make alignment of the fixtures 82, 84 easier. In addition, during disassembly a canted mating surface will provide immediate clearance between the mating surfaces. Although an angled surface of five (5) degrees is shown for illustrative purposes, any positive angle will produce benefits, with more severely canted surfaces, limited by the space available, producing greater benefits. While, a joint having no cant is possible, the likelihood of interference between mating surfaces during assembly and disassembly is increased due to the lack of radial clearance.

The joint flange 92 has a plurality of bolt holes 94, alignment holes 96, and cut-outs 98. The bolt holes 94 are symmetrically spaced about and parallel to the spanwise axis 68 of the strut 64. The cut-outs 98 correspond to portions of the joint flange 92 which are not loaded by a fastening means 100 engaged through the bolt holes 94. Removing the non-loaded portions of the flange 92 reduces the weight of the joint 72 without reducing the strength and load path efficiency.

A plurality of transverse ribs 102 pass through the hollow portion of the strut 64 to interconnect symmetric bolt holes 94. By interconnecting bolt holes 94 in this manner, the strength and rigidity of the joint 72 is increased. In effect, each rib 102 and the corresponding bolt hole 94 portions of the joint flange 92 act as bolted beams which extend from one side of the joint 72 to the other. The use of bolt holes 94 interconnected by ribs 102 and a joint flange 92 with cut-outs 98 produces the structural benefits of having a bolted plate type joint without the additional weight of structurally unnecessary portions of the plate.

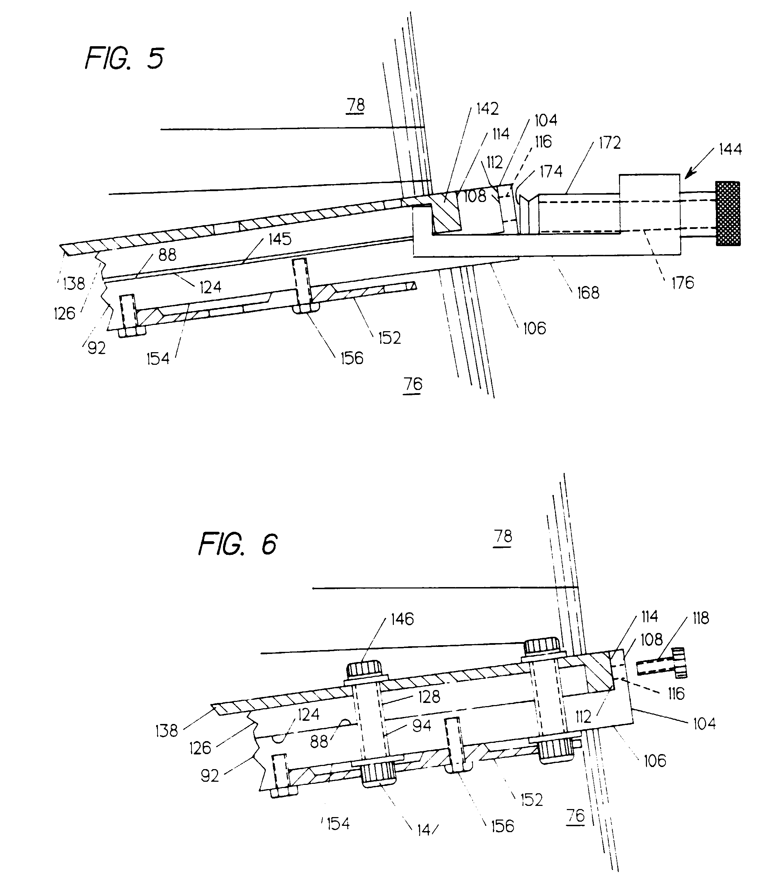

The first mating fixture 82 also has an axial stop 104 located on the downstream end 106 of the joint flange 92. The axial stop 104 consists of a radially outwardly extending lip 108 having an upstream facing surface 112 which mates with a downstream edge 114 of the second mating fixture 84. The lip 108 includes a threaded aperture 116 which extends through the lip 108 and is adapted to engage a jacking bolt 118 (see FIG. 6).

The second mating fixture 84 is located on the radially inward end 122 of the outer portion 78 and includes a second mating surface 124 and a joint flange 126 which compliment the first mating surface 88 and the joint flange 92, respectively, of the first mating fixture 82. The joint flange 126 of the second mating fixture 84 includes bolt holes 128, alignment holes 132, and cut-outs 134 which, in an assembled condition, align with the bolt holes 94, alignment holes 96, and cut-outs 98 respectively of the first mating fixture flange 82. As with the first mating fixture 82, the second mating fixture 84 includes a plurality of transverse ribs 136 which extend between symmetric bolt holes 128. The second mating fixture 84 also includes a secondary flange 138 which extends about the perimeter of the joint flange 126 and which includes a pair of radially inward projections 142. The projections 142 are configured to engage with a pulling tool 144 (see FIG. 5).

In a disassembled condition, a radial gap 145 exists between the two mating surfaces 88, 124 (see FIG. 5). The first mating surface 88 has a radial distance, defined by the radial distance between the first mating surface 88 and the centerline 14, which is less than the radial distance of the second mating surface 124, defined similarly. This difference produces the radial separation or gap 145 between the mating surfaces 88, 124. The radial gap 145 helps prevent interference due to misalignment of the mating fixtures 82, 84 during assembly of the powerplant 12. In an assembled condition, as shown in FIG. 1, the radial gap 145 is eliminated by the fastener means 100 which produces sufficient force to overcome the spring force of the outer ring 66. Elimination of the radial gap 145 introduces a tensile preload into the struts in an assembled condition. The tensile preload enhances the load bearing characteristics of the mounting structure.

The fastener means 100 provides means to removably fasten the mating fixtures, 82, 84. The fastener means is comprised of a plurality of threaded bolts 146 which are disposed within the bolt holes 94, 128. The threaded bolts 146 extend through both bolt holes 94, 128 and are engaged with a corresponding plurality of threaded nuts 148. The threaded nuts 148 are contained within a plurality of nut plates 152 which capture the threaded nuts 148 to provide a reaction force to the torque generated by the bolt 146 during assembly. The nut plates 152 are attached to the radially inward face 154 of the first mating fixture 82 through bolted engagement 156 with the first mating fixture 82.

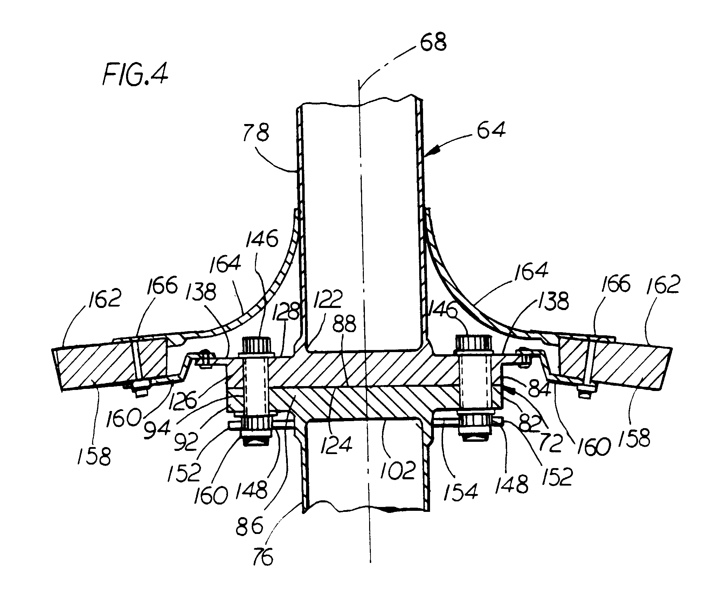

Referring now to FIG. 4, a plurality of sound panels 158 are circumferentially disposed between adjacent struts 64. Each of the sound panels 158 is a conical section mounted to adjacent struts 64 through bolted engagement with a bracket 160 attached to the secondary flange 138. The plurality of sound panels 158 form a radially inward flow surface 162 for a portion of the secondary flow passage 54. The flow surface 162 of the sound panels 158 is immediately downstream of the flow surface 56 of the flow splitter 52. The sound panels 158 are configured to reduce the acoustic energy emanating from the engine core 18. In addition, the sound panels 158 are rigid plates which provide rigidity to the outer portions 78 in the disassembled condition. Rigidity of the outer portions 28 facilitates alignment of the mating surfaces 82, 124 during assembly.

A molded fillet 164 is disposed about the inward end 122 of each outer portion 78. The molded fillet 164 provides a aerodynamically smooth transition between the outer portion 78 and the sound panels 158. Each of the molded fillets 164 is connected to the sound panels 158 by means of a bolted connection 166.

Assembly of the gas turbofan powerplant 12 is comprised of the following steps. First, the fan cowling 46, outer ring 66, and outer portion 78 are moved into position by axially convergent motion along the centerline 14 such that the first and second mating fixtures 82, 84 are in proximity. The fan cowling 46 is moved axially until the second mating fixture 84 abuts the axial stop 104. In the event that a joint 72 is not easily engaged, the pulling tool 144 may be used as shown in FIG. 5. The pulling tool 144 has appendages 168 which engage the projections 142 on the second mating fixture 84 and a threaded rod 172 with a face 174 which engages the downstream end 106 of the axial stop 104. The threaded rod 72 is engaged with a threaded aperture 176 in the pulling tool 144. As the threaded rod 172 is inserted into the threaded aperture 176, the face 174 exerts a force on the axial stop 104 to push the first mating fixture 82 upstream and the appendages 168 engage the projections 142 to pull the second mating fixture 84 downstream.

A third step may be necessary to align the bolt holes 94, 128. The step involves inserting a prying bar (not shown) into the alignment holes 96, 132 of the two mating fixtures 82, 84 and moving one fixture relative to the other fixture in a conventional manner. Interaction between the prying bar and the alignment holes 96, 132 can be used to align the bolt holes 94, 128 in order to insert the bolts 146. Once the bolt holes 94, 128 are aligned, the fourth step is to insert the bolts 146 into the bolt holes 94, 128 and engage them with the nuts 148 which are constrained within the nut plates 152. In the event that the alignment described above is insufficient to align the bolts 146 with the nuts 148, the nut plates 152 may be loosened by loosening the bolted connection 156 from the first mating fixture 82. In this way the nuts 148 are allowed some freedom of motion in order to align them with the bolts 146. Once all the bolts 146 are engaged with the nuts 148, the nut plates 152 are then secured to the first mating fixture 82.

Once all the joints 72 are engaged for the fan struts 64, the remaining steps consist of positioning and attaching to the turbofan powerplant 12 the remaining items. First, the molded fillets 164 are positioned around the struts 64 and bolted onto the sound panels. Next, the fan exit guide vane support cone 51 is positioned and bolted to the engine core 18 and fan exit guide vane 48. Third, the flow splitter 52 is positioned and the radial bolts 53 are installed. Fourth, the fan blades 44 are slid into the corresponding retaining grooves 49 and the fan blade pin 50 is inserted. Finally, a nose cone assembly 182 is bolted onto the front end of the engine. The nose cone assembly 182 includes a primary piece 184 and a secondary piece 186. Completion of the assembly procedure results in an assembled condition for the powerplant 12, as shown in FIG. 1.

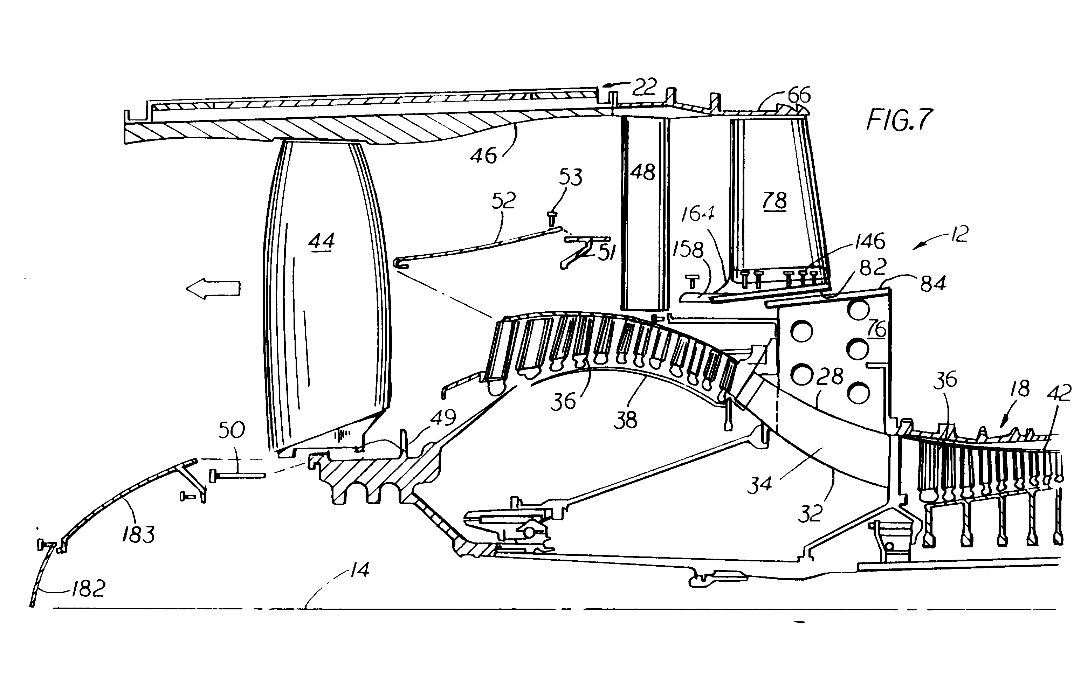

The method of disassembly of the gas turbofan powerplant is similar to the assembly procedure but in the reverse order. First, unbolt and remove the nose cone assembly 182. Second, the fan blade pin 50 is removed and the fan blades 44 are slid out of their retaining grooves 49. Third, the radial bolts 53 are removed from the flow splitter 52 and the flow splitter 52 is removed. Fourth, the fan exit guide vane support cone 51 is unbolted and removed. The fifth step is to unbolt the molded fillets 164 and remove them from each strut 64. The sixth step is to remove the joint bolts 146. Once the bolts 146 are removed, the spring force of the outer ring 66 should pull the mating fixtures 82, 84 apart and the radial gap between the mating surfaces 82, 84 should reappear. Once all the bolted joints 72 are unbolted, the fan cowling 46 can be removed from the engine core 18 by moving the fan cowling 46 and engine core 18 in opposite (divergent) directions along the longitudinal centerline 14 of the powerplant 12. In the event that a joint 72 does not separate easily, a jacking bolt 118 may be engaged with the threaded aperture 116 of the first mating fixture 82, as shown in FIG. 6. Upon sufficient engagement with the threaded aperture 116, the jacking bolt 118 will engage a downstream facing edge 114 of the second mating fixture 84 to force the second mating fixture 84 to separate from the first mating fixture 82. Completion of the disassembly procedure results in a disassembled condition for the powerplant 12, as shown in FIG. 7.

The assembly and disassembly procedures are facilitated by the presence of the joints 72 in the struts 64. The joints 72 separate the powerplant 12 into two modules. The first module 188 includes the engine core 18 and inner portion 76. The second module 192 includes the fan cowling 46, the guide vane 48, and the outer portion 78. Modularity makes the powerplant 12 more amenable to shipment. Instead of a single powerplant having large axial and radial dimensions, the invention produces a first module 188 having a smaller radial dimension and a second module 192 having a smaller axial dimension. It should be noted that the radial location of the joints 72 may, as shown in FIG. 7, determine the radial width of the first module and therefore the radial location of the joints 72 may be dependent on the allowable radial dimension of the first module 188.

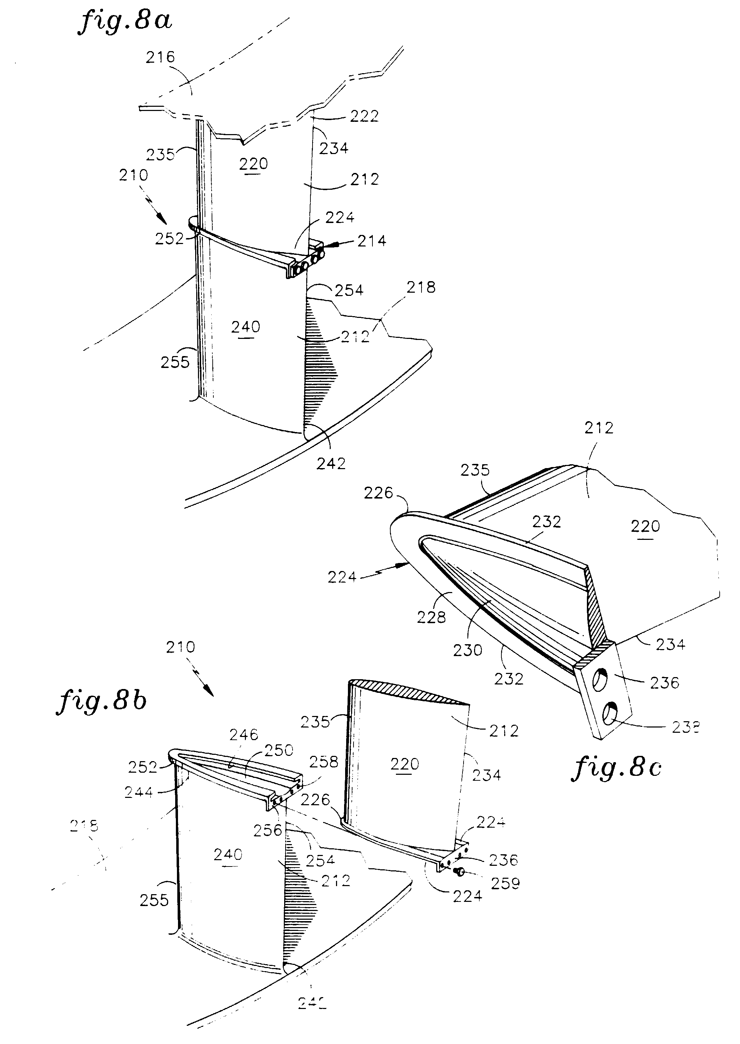

Another embodiment of the present invention is illustrated in FIGs. 8-12. Referring to FIG. 8a, the embodiment shown is a fan case strut 210 for joining together the engine core 216 and a radially outwardly disposed axial flow turbomachine fan case 218 at a plurality of circumferential locations. The fan case strut 210 is comprised of a radially inner strut portion 220 and a radially outer strut portion 240 which are joined together at a radially intermediate strut joint 214. The radially inner end 222 of the inner strut portion 220 is affixed to the engine core 216. Likewise, a radially outer end 242 of the outer strut portion 240 is affixed to the fan case 218. Each radially extreme connection is either fixed or releasably secured to its respective engine structure 216, 218 through known connection means.

As shown in FIG. 8b, the fan case strut joint 214 of the instant invention is releasably severable at a radially intermediate location of the strut 210. An axially extending tongue 226 disposed on the radially outer end 224 of the inner strut portion 220 engages with a corresponding axially extending groove 246 disposed in a radially inner end 244 of the outer strut portion 240 at two slidable contact surfaces intrinsic to a tongue and groove configuration, the resulting strut joint 214 extending transversely relative to the radially extending strut 210. The axially extending tongue 226 further has a lateral surface 228 defined by downstream diverging edges 232 (more clearly shown in FIG. 8c) which substantially radially correspond with the outer upstream periphery of the strut's streamlined cross-section. The tongue's receiving groove 246 has a corresponding profile which is peripherally disposed about the radially inner end 244 of the outer strut portion 240. Thus, the downstream diverging groove 252 of the outer strut portion 240 tapers towards the leading edges 235 and 255 of the strut portions 220, 240.

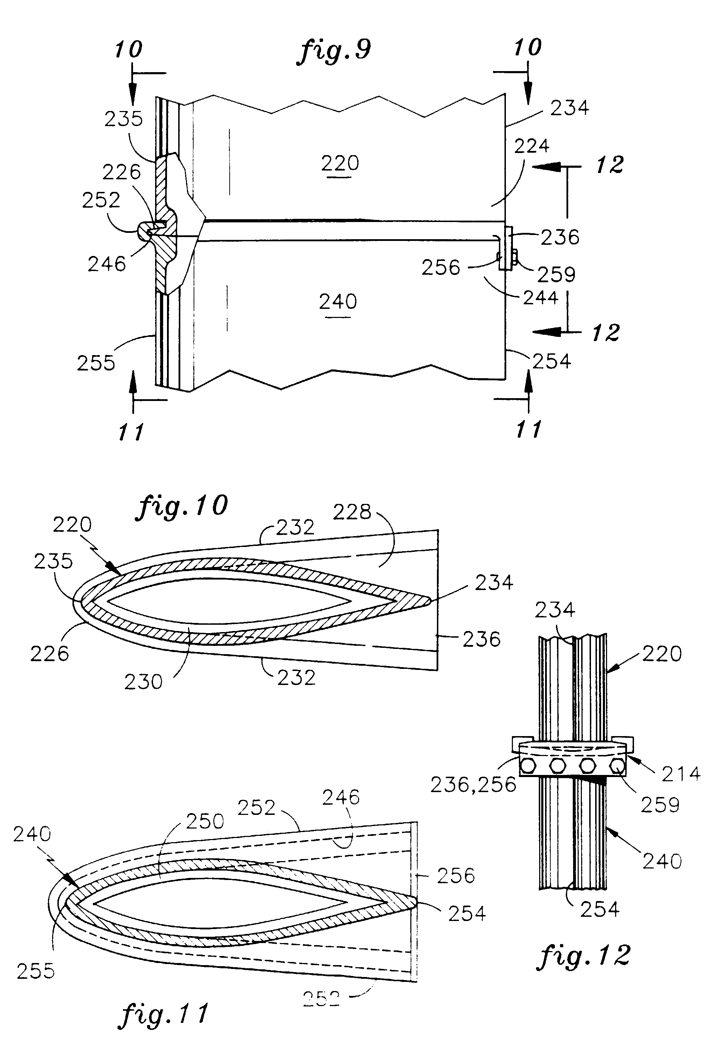

Now referring to Fig. 9, a partly broken away side view of the assembled strut joint 214 is shown, and a corresponding planar cross-sectional view of the radially outer end 224 of the inner strut portion 220 taken along the lines 10-10 of FIG. 9 is shown in FIG. 10. An axially extending, radially projecting contour 230, such as a ridge, disposed on the lateral surface 228 of the tongue 226 slidably cooperates with a corresponding furrow 250 disposed in the radially inner end 244 of the outer strut portion 240, shown in FIG. 11. Accordingly, this furrow 250 is symmetrically positioned between the downstream diverging contours 252 of the groove 246 and fully accommodates the contour 230 when the tongue 226 is fully engaged in the groove 246.

The present invention provides a strut joint engagement feature completely separate from a preliminary alignment feature. In particular, the contour 230 is slidably guided along and centered within the furrow 250 during initial assembly of the joint 214. The contour 230 is guided along an axial length of the furrow 250 which is shorter than the overall axial engagement length of the strut joint 214 by a distance equal to or greater than the tongue and groove's axial engagement length at the leading edge of the joint 214. Accordingly, the tongue 226 and groove 246 are initially engaged only after the contour 230 and furrow 250 have been fully engaged and any slidable contact between the contour 230 and furrow 250 ends prior to the tongue 226 and groove 246 engagement.

The contour's aftmost shaped section is configured to accommodate complete nesting of the contour 230 within the furrow 250 prior to initial engagement of the tongue 226 within the groove 246. Complete nesting of the contour 230 within the furrow 250 establishes the proper orientation of the tongue 226 relative to the groove 246 prior to assembly of these elements 226, 246. Alternatively, the aftmost portion of the radially inward end 244 of the outer portion 240 may be configured to provide a stepped configuration wherein the contour 230 is floated within the furrow 250 after alignment of the corresponding joint ends but prior to tongue 226 and groove 246 engagement. This alignment feature thus enables the simultaneous initial alignment of, for example, the corresponding portions 220, 240 of the nine radial fan case struts used in one version of the Pratt & Whitney 4000 series turbofan engine, prior to final engagement of the tongues 226 and grooves 246 used therein.

Referring again to FIG. 8b, the tongue 226 and groove 246 each have an axially disposed downstream trailing edge 234, 254 respectively. Two radially extending flanges 236, 256 disposed on the tongue 226 and proximate to the groove 246, respectively, are each proximately located near a trailing edge 234 of the inner strut portion and a trailing edge 254 of the outer strut portion, respectively.

The radially extending flanges 236, 256 are substantially parallel to each other and are substantially perpendicular to the plane defined by the slidable strut joint connection of the tongue and groove 226, 246, as shown in FIG. 12. After the tongue 226 has been fully engaged with the groove 246, these flanges 236, 256 are releasably joined together with a bolted connection 259 passing through corresponding bolt holes 238, 258 disposed in each flange 236, 256 respectively. This bolted connection 238, 258, 259 thus secures the strut joint 214 against significant relative axial sliding motion between the radially intermediate ends 224, 244. Due to their location and configuration, the flanges are not significant load bearing members and any loading which the fan case 218 is subjected to does not pass through the bolted flange connection 236, 256, 259. In addition to the above, the bolted connection 259 may be pretensioned or preloaded to correct for any minute wear in the strut joint 214.

The radially extending flanges 236, 256 may be disposed on a radially contiguous common edge such as the leading edge 235, 255, or the trailing edge 234, 254, of the fan case strut 210, but preferably only on the latter surfaces for aerodynamic efficiencies.

According to this embodiment, the strut portions 220, 240 of the fan case strut 210 include a streamlined airfoil surface 212 which provides certain shaped airflow induced benefits to the turbomachine (not shown). The radially intermediate ends 224, 244 of each portion 220, 240, respectively, are substantially chordwisely oriented, causing the strut portions 220, 240 to mate at a common chord of the aerodynamically shaped strut.

## Claims

1. An gas turbofan powerplant (12) of the type having an engine core (18) circumferentially disposed about a longitudinal centerline (14), the engine core (18) having a radially inner flow surface (56), a fan cowling (46) circumferentially disposed outward of and concentric with the engine core (18), the fan cowling (46) being subjected to operational loads during operation of the gas turbofan powerplant (12), and a plurality of through struts (64) extending radially between the radially inner flow surface (56) and the fan cowling (46), said plurality of struts (64) joining the engine core (18) and fan cowling (46) and transferring the operational loads between the engine core (18) and fan cowling (46), characterized in that each of said struts (64) includes a joint (72) having an engaged position and a disengaged position, each strut (64) including:
a radially inner portion (76) having a radially inward end disposed on the engine core (18) and a radially outward end (86) with a first mating fixture (82);
a radially outer portion (78) having a radially outward end disposed on the fan cowling (46) and a radially inward end (122) with a second mating fixture (84), said second mating fixture (84) adapted to cooperate with said first mating fixture (82) to transfer the operational loads between said outer portion (78) and said inner portion (76); and
means (100) to removably fasten said first mating fixture (82) and said second mating fixture (84), said fastening means (100) having an engaged position which corresponds with the engaged position of said joint (72) and disengaged position which corresponds to said disengaged position of said joint (72);
wherein said radially inner portion (76) in conjunction with the engine core (18) comprises a first module (188), said radially outer portion (78) in conjunction with the fan cowling (46) comprises a second module (192), and wherein said disengaged position of said joint (72) facilitates separation of said first module (188) from said second module (192) by permitting divergent relative motion of said first module (188) and said second module (192) along said longitudinal centerline (14).

2. The gas turbofan powerplant (12) according to Claim 1, wherein said first mating fixture (82) includes a first mating surface (88), said first mating surface (88) having a first radial distance defined by the radial separation between the centerline (14) and said first mating surface (88), said second mating fixture (84) includes a second mating surface (124), said second mating surface (124) having a second radial distance defined by the radial separation between the centerline (14) and said second mating surface (124), and wherein, in a disassembled condition, said second radial distance is greater than said first radial distance and wherein, in an assembled condition, said through struts (64) have a tensile preload.

3. The gas turbofan powerplant (12) according to Claim 1, wherein said first mating fixture (82) includes a planar mating surface (88) which is canted relative to the centerline (14) and wherein said plurality of first mating fixtures (82) approximate a radially outwardly facing conical surface.

4. The gas turbofan powerplant (12) according to Claim 1, wherein said first mating fixture (82) has a plurality of bolt holes (94) disposed symmetrically about said strut (64), said second mating fixture (84) has a plurality of bolt holes (128) formed to complement said bolt holes (94) of said first mating fixture (82), and wherein said fastener means (100) is comprised of a plurality of threaded bolts (146) disposed within the bolt holes (94;128) and adapted to pass through said bolt holes (94) of the inner portion (76) and said bolt holes (128) of said outer portion (78), and a plurality of threaded nuts (148) adapted to engage with said threaded bolts (146), wherein the engagement between said threaded bolts (146) and said threaded nuts (148) causes abutting contact between said first mating fixture (82) and said second mating fixture (84).

5. The gas turbofan powerplant (12) according to Claim 4, further comprising a plurality of nut plates (152) configured to engage with said threaded nuts (148) to capture said nuts (148), said nut plates (152) disposed on a radially inward face (154) of said first mating fixture (82) through bolted engagement (156) with said inward face (154).

6. The gas turbofan powerplant (12) according to Claim 4, wherein said first mating fixture (82) has a plurality of ribs (102) disposed between symmetric bolt holes (94) and passing through said strut (64), and wherein said second mating fixture (84) has a plurality of rib (136) disposed between symmetric bolt holes (128) and passing through said strut (64).

7. The gas turbofan powerplant (12) according to Claim 1, wherein said first mating fixture (82) has a plurality of alignment holes (96) and said second mating fixture (84) has a corresponding plurality of alignment holes (132) formed to compliment said alignment holes (96) of said first mating fixture (82), wherein said alignment holes (96;132) are adapted to engage with a prying bar in a manner permitting said prying bar to move said first mating fixture (82) relative to said second mating fixture (84).

8. The gas turbofan powerplant (12) according to Claim 1, wherein said second mating fixture (84) has a downstream facing edge (114), said first mating fixture (82) has an outwardly radially extending lip (108), said lip (108) having an upstream facing surface (112), said upstream facing surface (112) adapted to engage in abutting contact with the downstream facing edge (114) of said second mating fixture (84).

9. The gas turbofan powerplant (12) according to Claim 8, wherein said lip (108) has a threaded aperture (116) extending longitudinally, said aperture (116) adapted to engage with a jacking bolt (118), wherein said jacking bolt (118) has a sufficient length to permit said jacking bolt (118) to pass through said threaded aperture (116) and engage with the downstream facing edge (114) of said second mating fixture (84).

10. The gas turbofan powerplant (12) according to Claim 1, wherein said inner portion (76) is further comprised of a core portion (79), which extends through the primary flow passage (34) and has an aerodynamic cross-sectional shape, and an intermediate portion (80), which extends from the engine outer case (28) to the joint (72).

11. The gas turbofan powerplant (12) according to Claim 1, further comprising a plurality of sound panels (158) each sound panel (158) disposed between and joined to adjacent outer portions (78), said plurality of sound panels (158) adapted to form a radially inward flow surface (162) for said secondary flow passage (54), said sound panels (158) adapted to reduce the acoustic energy emitted by the engine core (18) and to provide structural support to the inward ends (122) of said outer portions (78), and wherein said first module (188) includes said plurality of sound panels (158).

12. The gas turbofan powerplant (12) according to Claim 4, wherein said first mating fixture (82) has a plurality of cut-outs (98) disposed between adjacent bolt holes (94), said cut-outs (98) corresponding to non-preloaded regions of said first mating fixture (82) with said threaded bolts (146) and said threaded nuts (148) engaged.

13. A gas turbofan powerplant (12) having a longitudinally extending centerline (14), said powerplant (12) comprised of:
an engine core (18) which includes a low pressure compressor (29) and a high pressure compressor (30) downstream thereof and is circumferentially disposed about the centerline (14), said engine core (18) having a radially outer case (28) and an inner platform (32) spaced radially inwardly from said outer case (28) leaving an annular primary flow passage (24) therebetween adapted for flowing a gas through said engine core (18);
a fan assembly (22) including a plurality of fan blades (44) and a fan cowling (46) circumferentially disposed outward of and concentric with said engine core (18), said fan assembly (22) defining an annular secondary flow passage (26) adapted for flowing a gas through said fan assembly (22);
an intermediate case (62) circumferentially disposed about the centerline (14) and axially disposed between said low pressure compressor (29) and said high pressure compressor (30), said intermediate case (62) including an outer ring (66) attached to said fan cowling (46) and a plurality of through struts (64) extending radially between and joining said inner platform (32) and said outer ring (66), said through struts (64) adapted to transfer operational loads between said fan cowling (46) and said engine core (18), each of said struts (64) having a spanwise axis (68) extending radially from the centerline (14), each strut (64) being hollow and circumferentially continuous about the spanwise axis (68) each strut (64) having a joint (72) disposed between said outer case (28) and said fan cowling (46), characterized in that each of said struts (64) includes:
a radially inner portion (76) spanning between said inner platform (32) and said joint (72), including a radially outward end (86) having a first mating fixture (82), said first mating fixture (82) including a first mating surface (88) and a joint flange (92) disposed about the perimeter of said outward end (86), said first mating surface (88) defining a plane which is canted relative to the centerline (14) and having in a disassembled condition a first radial distance defined by the separation between the centerline (14) and said first mating surface (88) along the spanwise axis (68), said first mating fixture (82) having a plurality of bolt holes (94) disposed symmetrically about a plane defined by the spanwise axis (68) of the strut (64) and the centerline (14), a plurality of ribs (102) disposed between symmetric bolt holes (94) and passing through said hollow strut (64), a plurality of alignment holes (96), and an outwardly radially extending lip (108);
a radially outer portion (78) spanning the secondary flow passage (26) and having an aerodynamic cross-section, said outer portion (78) including a radially outward end mounted on said outer ring (66) and a radially inward end (122) located on said joint (72), said inward end (122) having a second mating fixture (84), said second mating fixture (84) including a second mating surface (124) and a joint flange (126) disposed about the perimeter of said inward end (122), said second mating surface (126) having in a disassembled condition a second radial distance defined by the separation between the centerline (14) and said second mating surface (124) along the spanwise axis (68), said second mating fixture (84) adapted to complement said first mating fixture (82), said second mating fixture (84) having a plurality of bolt holes (128) formed to compliment said bolt holes (94) of said first mating surface (82), a plurality of ribs (136) disposed between symmetric bolt holes (128) and passing through said strut (64), and a plurality of alignment holes (132) formed to compliment said alignment holes (96) of the first mating fixture (82), and wherein, in a disassembled condition, said second radial distance is greater than said first radial distance such that a gap (145) is defined by the radial separation;
a plurality of threaded bolts (146) disposed within the bolt holes (94, 128) and adapted to pass through said bolt holes (94) of said inner portion (76) and said bolt holes (128) of said outer portion (78);
a plurality of threaded nuts (148) adapted to engage with said threaded bolts (146), wherein the engagement between said threaded bolts (146) and said threaded nuts (148) causes abutting contact between said first mating surface (88) and said second mating surface (124);
a plurality of nut plates (152) configured to engage with said threaded nuts (148) to capture said nuts (148), said nut plates (152) disposed on the radially inward face (154) of said first mating fixture (82) through bolted engagement (156) with said inward face (154);
and a plurality of sound panels (158), each sound panel (158) disposed between and joined to adjacent outer portions (78), said plurality of sound panels (158) adapted to form a radially inward flow surface for said secondary flow passage (54), said sound panels (158) adapted to reduce the acoustic energy emitted by the powerplant (12) and to provide structural support to the inward ends (122) of said outer portions (78);
a plurality of molded fillets (164) disposed about the inward ends (122) of each outer portion (78), each of said molded fillets (164) adapted to provide a radially outward aerodynamic covering for the juncture between said outer portions (78) and said sound panels (158);
wherein said engine core (18), said intermediate case (62) and said inner portion (76) comprises a first module (188), and wherein said fan cowling (46), said sound panels (158) and said radially outer portion (78) comprises a second module (192); and wherein disengagement of said threaded nuts (148) and said threaded bolts (146) facilitates axial separation of said first module (188) from said second module (192) by permitting said modules (188; 192) divergent relative motion along said centerline (14).

14. A method of assembling and disassembling a gas turbofan powerplant (12), the gas turbofan powerplant (12) including an engine core (18) circumferentially disposed about a longitudinal centerline (14), a fan cowling (46) circumferentially disposed outward of and concentric with the engine core (18), and a plurality of radially extending struts (64) joining the fan cowling (46) to the engine core (18), each of the struts (64) having an inner portion (76) and an outer portion (78), the inner portion (76) and the outer portion (78) coupled at a joint (72) having an engaged position and a disengaged position, wherein a first module (188) is comprised of the engine core (18) and inner portion (76), and a second module (192) is comprised of the fan cowling (46) and the outer portion (78), the method comprising the steps of;
(a) manipulating the joints (72) between the engaged position and the disengaged position; and
(b) axially moving the first module (188) relative to the second module (192) along the longitudinal centerline (14).

15. Axial flow turbomachine (12) having an engine core (216) annularly disposed about a longitudinal axis (14) passing therethrough, a coaxial fan case (218) disposed radially outwardly of the engine core (216), and a plurality of radially-extending load-bearing struts (210) circumferentially disposed therebetween, characterized in that each strut (210) comprising:
a radially inward portion (220) and a radially outward portion (240), the portions (220;240) having a substantially contiguous axially downstream trailing edge (234;254), wherein a radially inner end (222) of the inward portion (220) is affixed to the engine core (216), and wherein a radially outer end (242) of the outward portion (240) is affixed to the fan case (218); and
an axially extending tongue (226) disposed on a radially outer end (224) of the inward portion (220) slidably engaged with a corresponding axially extending groove (246) disposed on a radially inner end (244) of the outward portion (240).

16. The turbomachine (12) of Claim 15, wherein the strut (210) is further characterized by;
a radially extending first flange (236) disposed on the tongue (226) proximate to the trailing edge (234) of the inner portion (220), and
a radially extending second flange (256) disposed proximate to the trailing edge (254) of the outward portion (240), and means (256) for releasably securing said first and second flanges (236; 256) when the tongue (226) and groove (246) are fully engaged.

17. The turbomachine (12) of Claim 15 or 16, wherein the strut (210) is further characterized by;
an axially extending tongue (226) disposed on a radially outer end (224) of the inward portion (220) slidably engaged with a corresponding axially extending groove (246) disposed on a radially inner end (244) of the outward portion (240),
an axially extending, radially outwardly projecting contour (230) disposed on the tongue (226), and
an axially extending furrow (250) disposed in the radially inner end (244) of the outward strut portion (240), wherein the contour (230) nests within the furrow (250) when said portions (220; 240) are joined at a chord of the strut (210) at about the strut's midspan.

18. The turbomachine (12) of any one of Claim 15, 16 or 17, wherein the strut (210) is further characterized by a streamlined surface disposed on the portions (220 ; 240).

## Patentansprüche

1. Gas-Turbobläser-Kraftmaschine (12) des Typs mit einem umfangsmäßig um eine Längsmittellinie (14) angeordneten Maschinenkern (18), wobei der Maschinenkern (18) eine radial innere Strömungsfläche (56) aufweist, eine Bläserverkleidung (46), die umfangsmäßig außen von und konzentrisch mit dem Maschinenkern (18) angeordnet ist und beim Betrieb der Gas-Turbobläser-Kraftmaschine (12) Betriebsbelastungen ausgesetzt ist, und mehrere Durchgangsstreben (64), die sich zwischen der radial inneren Strömungsfläche (56) und der Bläserverkleidung (46) radial erstrecken, die den Maschinenkern (18) und die Bläserverkleidung (46) verbinden und die Betriebsbeanspruchungen zwischen dem Maschinenkern (18) und der Bläserverkleidung (46) übertragen, dadurch gekennzeichnet,
daß jede der Streben (64) eine Verbindungseinrichtung (72) aufweist, für die es eine Eingriffsposition und eine Nicht-Eingriffsposition gibt, wobei jede Strebe (64) aufweist:
einen radial inneren Abschnitt (76) mit einem an dem Maschinenkern (18) angeordneten radial inneren Ende und einem radial äußeren Ende (86) mit einer ersten Verbindebefestigung (82); einen radial äußeren Abschnitt (78) mit einem an der Bläserverkleidung (46) angeordneten radial äußeren Ende und einem radial inneren Ende (122) mit einer zweiten Verbindebefestigung (84), wobei die zweite Verbindebefestigung (84) geeignet ist, mit der ersten Verbindebefestigung (82) zusammenzuwirken, um die Betriebsbeanspruchungen zwischen dem äußeren Abschnitt (78) und dem inneren Abschnitt (76) zu übertragen; und
eine Einrichtung (100) zum entfernbaren Befestigen der ersten Verbindebefestigung (82) und der zweiten Verbindebefestigung (84), wobei die Befestigungseinrichtung (100) eine Eingriffsposition aufweist, die der Eingriffsposition der Verbindungseinrichtung (72) entspricht und eine Nicht-Eingriffsposition, die der Nicht-Eingriffsposition der Verbindungseinrichtung (72) entspricht; wobei der radial innere Abschnitt (76) in Verbindung mit dem Maschinenkern (18) ein erstes Modul (188) bildet, wobei der radial äußere Abschnitt (78) in Verbindung mit der Bläserverkleidung (46) ein zweites Modul (192) bildet und wobei die Nicht-Eingriffsposition der Verbindungseinrichtung (72) die Trennung des ersten Moduls (188) von dem zweiten Modul (192) erleichtert, indem es eine relative Auseinanderbewegung des ersten Moduls (188) und des zweiten Moduls (192) entlang der Längs-Mittellinie (14) erlaubt.

2. Gas-Turbobläser-Kraftmaschine (12) nach Anspruch 1, wobei die erste Verbindebefestigung (82) eine erste Verbindefläche (88) aufweist, die einen durch die radiale Trennung zwischen der Mittellinie (14) und der ersten Verbindefläche (88) definierten ersten radialen Abstand besitzt, wobei die zweite Verbindebefestigung (84) eine zweite Verbindefläche (124) aufweist, die einen durch die radiale Trennung zwischen der Mittellinie (14) und der zweiten Verbindefläche (124) definierten zweiten radialen Abstand besitzt, und wobei in einem nicht zusammengebauten Zustand der zweite radiale Abstand größer ist als der erste radiale Abstand und wobei in einem zusammengebauten Zustand die Durchgangsstreben (64) eine Vorbelastung auf Zug haben.

3. Gas-Turbobläser-Kraftmaschine (12) nach Anspruch 1, wobei die erste Verbindebefestigung (82) eine ebene Verbindefläche (88) aufweist, die relativ zu der Mittellinie (14) schräg ist, und wobei die mehreren ersten Verbindebefestigungen (82) annähernd eine radial nach außen gerichtete konische Fläche bilden.

4. Gas-Turbobläser-Kraftmaschine (12) nach Anspruch 1, wobei die erste Verbindebefestigung (82) mehrere symmetrisch um die Strebe (64) angeordnete Schraubenlöcher (94) besitzt, wobei die zweite Verbindebefestigung (84) mehrere Schraubenlöcher (128) so gebildet besitzt, daß sie zu den Schraubenlöchern (94) der ersten Verbindebefestigung (82) komplementär sind, und wobei die Befestigungseinrichtung (100) aus mehreren Gewindeschrauben (146), die in den Schraubenlöchern (94; 128) angeordnet sind und geeignet sind, durch die Schraubenlöcher (94) des inneren Abschnitts (76) und die Schraubenlöcher (128) des äußeren Abschnitts (78) hindurchzugehen, und mehreren Gewindemuttern (148) gebildet ist, die geeignet sind, mit den Gewindeschrauben (146) in Eingriff zu sein, wobei der Eingriff zwischen den Gewindeschrauben (146) und den Gewindemuttern (148) anliegenden Kontakt zwischen der ersten Verbindebefestigung (82) und der zweiten Verbindebefestigung (84) bewirkt.

5. Gas-Turbobläser-Kraftmaschine (12) nach Anspruch 4, ferner aufweisend mehrere Mutternplatten (152), die zum Zusammenwirken mit den Gewindemuttern (148) gestaltet sind, um diese Muttern (148) zu fangen, wobei die Mutternplatten (152) an einer radial inneren Fläche (154) der ersten Verbindebefestigung (82) durch eine Verschraubung (156) mit der inneren Fläche (154) angeordnet sind.

6. Gas-Turbobläser-Kraftmaschine (12) nach Anspruch 4, wobei die erste Verbindebefestigung (82) mehrere Rippen (102) aufweist, die zwischen symmetrischen Schraubenlöchern (94) angeordnet sind und durch die Strebe (64) hindurchgehen, und wobei die zweite Verbindebefestigung (84) mehrere Rippen (136) aufweist, die zwischen symmetrischen Schraubenlöchern (128) angeordnet sind und durch die Strebe (64) hindurchgehen.

7. Gas-Turbobläser-Kraftmaschine (12) nach Anspruch 1, wobei die erste Verbindebefestigung (82) mehrere Ausrichtöffnungen (96) aufweist und die zweite Verbindebefestigung (84) entsprechend mehrere Ausrichtöffnungen (132) so gebildet aufweist, daß sie zu den Ausrichtöffnungen (96) der ersten Verbindebefestigung (82) komplementär sind, wobei die Ausrichtöffnungen (96; 132) geeignet sind, mit einer Hebelstange in einer Art zusammenzuwirken, die es zuläßt, daß die Hebelstange die erste Verbindebefestigung (82) relativ zu der zweiten Verbindebfestigung (84) bewegt.

8. Gas-Turbobläser-Kraftmaschine (12) nach Anspruch 1, wobei die zweite Verbindebefestigung (84) einen strömungsabwärts gerichteten Rand (114) aufweist, wobei die erste Verbindebefestigung (82) eine radial nach außen ragende Lippe (108) aufweist, die eine strömungsaufwärts gerichtete Fläche (112) besitzt, wobei die strömungsaufwärts gerichtete Fläche (112) geeignet ist, in anliegendem Kontakt mit dem strömungsabwärts gerichteten Rand (114) der zweiten Verbindebefestigung (84) zusammenzuwirken.

9. Gas-Turbobläser-Kraftmaschine (12) nach Anspruch 8, wobei die Lippe (108) eine Gewindeöffnung (116) aufweist, die in Längsrichtung verläuft und geeignet ist, mit einer Ausdrückschraube (118) zusammenzuwirken, wobei die Ausdrückschraube (118) eine ausreichende Länge besitzt, so daß sie durch die Gewindeöffnung (116) hindurchgehen kann und mit dem strömungsabwärts gerichteten Rand (114) der zweiten Verbindebefestigung (84) in Eingriff kommen kann.

10. Gas-Turbobläser-Kraftmaschine (12) nach Anspruch 1, wobei der innere Abschnitt (76) ferner einen inneren Kernabschnitt (79), der sich durch die primäre Strömungspassage (34) erstreckt und eine aerodynamische Querschnittsgestalt besitzt, und einen Zwischenabschnitt (80) aufweist, der sich von dem äußeren Maschinengehäuse (28) zu der Verbindungseinrichtung (72) erstreckt.

11. Gas-Turbobläser-Kraftmaschine (12) nach Anspruch 1, ferner aufweisend mehrere Schalltafeln (158), die je zwischen benachbarten äußeren Abschnitten (78) angeordnet sind und mit diesen verbunden sind, wobei die mehreren Schalltafeln (158) eine radial innere Strömungsfläche (162) für die sekundäre Strömungspassage (54) bilden können und geeignet sind, die von dem Maschinenkern (18) abgegebene akustische Energie zu reduzieren und für die inneren Enden (122) der äußeren Abschnitte (78) eine strukturelle Abstützung zu bilden, und wobei das erste Modul (188) die mehreren Schalltafeln (158) aufweist.

12. Gas-Turbobläser-Kraftmaschine (12) nach Anspruch 4, wobei die erste Verbindebefestigung (82) mehrere Ausschnitte (98) aufweist, die zwischen benachbarten Schraubenlöchern (94) angeordnet sind und mit nicht vorbelasteten Bereichen der ersten Verbindebefestigung (82) bei Eingriff der Gewindeschrauben (146) und der Gewindemuttern (148) korrespondieren.

13. Gas-Turbobläser-Kraftmaschine (12) mit einer in Längsrichtung verlaufenden Mittellinie (14), wobei die Kraftmaschine (12) aufweist:
einen Maschinenkern (18), der einen Niederdruckverdichter (29) und strömungsabwärts davon einen Hochdruckverdichter (30) aufweist und umfangsmäßig um die Mittellinie (14) angeordnet ist, wobei der Maschinenkern (18) ein radial äußeres Gehäuse (28) und radial innen von dem äußeren Gehäuse (28) beabstandet eine innere Plattform (32) unter Belassung einer ringförmigen primären Strömungspassage (24) dazwischen aufweist, die für das Strömen eines Gases durch den Maschinenkern (18) geeignet ist;
eine Bläseranordnung (22), die mehrere Bläserschaufeln (44) und eine umfangsmäßig außen von und konzentrisch mit dem Maschinenkern (18) angeordnete Bläserverkleidung (46) aufweist, wobei die Bläseranordnung (22) eine ringförmige sekundäre Strömungspassage (26) definiert, die für das Strömen eines Gases durch die Bläseranordnung (22) geeignet ist;
einem Zwischengehäuse (62), das umfangsmäßig um die Mittellinie (14) angeordnet ist und axial zwischen dem Niederdruckverdichter (29) und dem Hochdruckverdichter (30) angeordnet ist, wobei das Zwischengehäuse (62) einen äußeren an der Bläserverkleidung (46) befestigten Ring (66) und mehrere Durchgangsstreben (64) aufweist, die sich radial zwischen der inneren Plattform (32) und dem äußeren Ring (66) erstrecken und diese verbinden, wobei die Durchgangsstreben (64) geeignet sind, Betriebsbeanspruchungen zwischen der Bläserverkleidung (46) und dem Maschinenkern (18) zu übertragen, wobei jede der Streben (64) eine Achse (68) in Erstreckungsrichtung aufweist, die sich radial von der Mittellinie (14) erstreckt, und jede Strebe (64) hohl und umfangsmäßig um die Achse (68) in Erstreckungsrichtung kontinuierlich ist, wobei jede Strebe (64) eine Verbindungseinrichtung (72) aufweist, die zwischen dem äußeren Gehäuse (28) und der Bläserverkleidung (46) angeordnet ist,
dadurch gekennzeichnet,
daß jede der Streben (64) aufweist:
einen radial inneren Abschnitt (76), der sich zwischen der inneren Plattform (32) und der Verbindungseinrichtung (72) erstreckt und ein radial äußeres Ende (86) mit einer ersten Verbindebefestigung (82) aufweist, wobei die erste Verbindebefestigung (82) eine erste Verbindefläche (88) und einen Verbindungsflansch (92) aufweist, der um den Umfang des äußeren Endes (86) angeordnet ist, wobei die erste Verbindefläche (88) eine Ebene definiert, die relativ zu der Mittellinie (14) schräg ist und in einem auseinandergebauten Zustand einen ersten radialen Abstand besitzt, der durch die Trennung zwischen der Mittellinie (14) und der ersten Verbindefläche (88) entlang der Achse in Erstreckungsrichtung (68) definiert ist, wobei die erste Verbindebefestigung (82) mehrere Schraubenlöcher (94), die symmetrisch um eine von der Achse (68) der Strebe (64) in Erstreckungsrichtung und der Mittellinie (14) definierte Ebene symmetrisch angeordnet sind, mehrere Rippen (102), die zwischen symmetrischen Schraubenlöchern (94) angeordnet sind und durch die hohle Strebe (64) hindurchgehen, mehrere Ausrichtöffnungen (96) und eine radial nach außen ragende Lippe (108) aufweist;
einen radial äußeren Abschnitt (78), der sich über die sekundäre Strömungspassage (26) erstreckt und einen aerodynamischen Querschnitt besitzt, wobei der äußere Abschnitt (78) ein an dem äußeren Ring (66) montiertes radial äußeres Ende und ein an der Verbindungseinrichtung (72) angeordnetes radial inneres Ende (122) aufweist, wobei das innere Ende (122) eine zweite Verbindebefestigung (84) aufweist, die eine zweite Verbindefläche (124) und einen um den Umfang des inneren Endes (122) angeordneten Verbindungsflansch (126) aufweist, wobei die zweite Verbindefläche (126) in einem auseinandergebauten Zustand einen durch die Trennung zwischen der Mittellinie (14) und der zweiten Verbindefläche (124) entlang der Achse (68) in Erstreckungsrichtung definierten zweiten radialen Abstand hat, wobei die zweite Verbindebefestigung (84) angepaßt ist, zu der ersten Verbindebefestigung (82) komplementär zu sein, wobei die zweite Verbindebefestigung (84) mehrere Schraubenlöcher (128), die so gebildet sind, daß sie zu den Schraubenlöchern (94) der ersten Verbindefläche (82) komplementär sind, mehrere Rippen (136), die zwischen symmetrischen Schraubenlöchern (128) angeordnet sind und durch die Strebe (64) hindurchgehen, und mehrere Ausrichtöffnungen (132) so gebildet aufweist, daß sie zu den Ausrichtöffnungen (96) der ersten Verbindebefestigung (82) komplementär sind, und wobei in einem auseinandergebauten Zustand der zweite radiale Abstand größer ist als der erste radiale Abstand, so daß durch die radiale Trennung ein Spalt (145) definiert ist;
mehrere Gewindeschrauben (146), die in den Schraubenlöchern (94; 128) angeordnet sind und geeignet sind, durch die Schraubenlöcher (94) des inneren Abschnitts (76) und die Schraubenlöcher (128) des äußeren Abschnitts (78) hindurchzugehen;
mehrere Gewindemuttern (148), die geeignet sind, mit den Gewindeschrauben (146) in Eingriff zu sein, wobei der Eingriff zwischen den Gewindeschrauben (146) und den Gewindemuttern (148) einen anliegenden Kontakt zwischen der ersten Verbindefläche (88) und der zweiten Verbindefläche (124) ergibt;
mehrere Mutternplatten (152), die für ein Zusammenwirken mit den Gewindemuttern (148) gestaltet sind, um die Muttern (148) zu fangen, wobei die Mutternplatten (152) an der radial inneren Fläche (154) der ersten Verbindebefestigung (82) durch eine Verschraubung (156) mit der inneren Fläche (154) angeordnet sind;
und mehrere Schalltafeln (158), von denen jede zwischen benachbarten äußeren Abschnitten (78) angeordnet ist und mit diesen verbunden ist, wobei die mehreren Schalltafeln (158) geeignet sind, eine radial innere Strömungsfläche für die sekundäre Strömungspassage (54) zu bilden, die von der Kraftmaschine (12) emittierte akustische Energie zu reduzieren und für die inneren Enden (122) der äußeren Abschnitt (78) eine strukturelle Abstützung zu schaffen;
mehrere geformte Abrundungen (164), die um die inneren Enden (122) jedes äußeren Abschnitts (78) herum angeordnet sind und von denen jede geeignet ist, eine radial äußere aerodynamische Verkleidung für die Verbindungsstelle zwischen den äußeren Abschnitten (78) und den Schalltafeln (158) zu schaffen;
wobei der Maschinenkern (18), das Zwischengehäuse (62) und der innere Abschnitt (76) ein erstes Modul (188) bildet und wobei die Bläserverkleidung (46), die Schalltafeln (158) und der radial äußere Abschnitt (78) ein zweites Modul (192) bildet; und wobei das außer Eingriff Bringen der Gewindemuttern (148) und der Gewindeschrauben (146) die Trennung in Längsrichtung des ersten Moduls (188) von dem zweiten Modul (192) erleichtert, indem es den Modulen (188, 192) eine relative Auseinanderbewegung entlang der Mittellinie (14) ermöglicht.

14. Verfahren zum Zusammenbauen und Auseinanderbauen einer Gas-Turbobläser-Kraftmaschine (12), wobei die Gas-Turbobläser-Kraftmaschine (12) einen umfangsmäßig um eine Längsmittellinie (14) herum angeordneten Maschinenkern (18), eine umfangsmäßig außen von und konzentrisch mit dem Maschinenkern (18) angeordnete Bläserverkleidung (46) und mehrere sich radial erstreckende Streben (64) aufweist, die die Bläserverkleidung (46) mit dem Maschinenkern (18) verbinden und je einen inneren Abschnitt (76) und einen äußeren Abschnitt (78) besitzen, wobei der innere Abschnitt (76) und der äußere Abschnitt (78) an einer Verbindungseinrichtung (72) mit einer Eingriffsposition und einer Nicht-Eingriffsposition gekoppelt sind, wobei ein erstes Modul (188) den Maschinenkern (18) und den inneren Abschnitt (76) aufweist und ein zweites Modul (192) die Bläserverkleidung (46) und den äußeren Abschnitt (78) aufweist, wobei das Verfahren folgende Schritte aufweist:
(a) Manipulieren der Verbindungseinrichtungen (72) zwischen der Eingriffsposition und der Nicht-Eingriffsposition; und
(b) in Längsrichtung Bewegen des ersten Moduls (188) relativ zu dem zweiten Modul (192) entlang der Längsmittellinie (14).

15. Axialströmungsturbomaschine (12) mit einem ringförmig um eine durch diesen hindurchgehende Längsachse (14) angeordneten Maschinenkern (216), einem radial außen von dem Maschinenkern (216) angeordneten koaxialen Bläsergehäuse (218) und mehreren, sich radial erstreckenden, Belastung tragenden Streben (210), die umfangsmäßig dazwischen angeordnet sind,
dadurch gekennzeichnet,
daß jede Strebe (210) aufweist:
einen radial inneren Abschnitt (220) und einen radial äußeren Abschnitt (240), wobei die Abschnitte (220; 240) eine im wesentlichen angrenzende in Längsrichtung strömungsabwärtige Hinterkante (234; 254) haben, wobei ein radial inneres Ende (222) des inneren Abschnitts (220) an dem Maschinenkern (216) befestigt ist und ein radial äußeres Ende (242) des äußeren Abschnitts (240) an dem Bläsergehäuse (218) befestigt ist; und
eine sich in Längsrichtung erstreckende Zunge (226), die an einem radial äußeren Ende (224) des inneren Abschnitts (220) schiebbar mit einer korrespondierenden sich in Längsrichtung erstreckenden Nut (246) in Eingriff ist, die an einem radial inneren Ende (244) des äußeren Abschnitts (240) angeordnet ist.

16. Turbomaschine (12) nach Anspruch 15, wobei die Strebe (210) ferner gekennzeichnet ist durch
einen sich radial erstreckenden ersten Flansch (236), der an der Zunge (226) nahe bei der Hinterkante (234) des inneren Abschnitts (220) angeordnet ist; und
einen sich radial erstreckenden zweiten Flansch (256), der nahe bei der Hinterkante (254) des äußeren Abschnitts (240) angeordnet ist, und eine Einrichtung (256) zum lösbar Befestigen des ersten und zweiten Flansches (236; 256), wenn die Zunge (226) und die Nut (246) in vollständigem Eingriff sind.

17. Turbomaschine (12) nach Anspruch 15 oder 16, wobei die Strebe (210) ferner gekennzeichnet ist durch
eine sich axial erstreckende Zunge (226), die an einem radial äußeren Ende (224) des inneren Abschnitts (220) schiebbar mit einer korrespondierenden sich in Längsrichtung erstreckenden Nut (246) in Eingriff ist, die an einem radial inneren Ende (244) des äußeren Abschnitts (240) angeordnet ist,
eine sich axial erstreckende radial äußere vorspringende Kontur (230), die an der Zunge (226) angeordnet ist, und
eine sich axial erstreckende Hohlkehle (250), die in dem radial inneren Ende (244) des äußeren Strebenabschnitts (240) angeordnet ist, wobei die Kontur (230) sich in die Hohlkehle (250) einfügt, wenn die Abschnitte (220; 240) an einer Profilsehne der Strebe (210) etwa bei der Erstreckungsmitte der Strebe verbunden sind.

18. Turbomaschine (12) nach einem der Ansprüche 15, 16 oder 17, wobei die Strebe (210) ferner gekennzeichnet ist durch eine stromlinienförmige Fläche an den Abschnitten (220; 240).

## Revendications

1. Un groupe motopropulseur à turboréacteur à double flux (12), du type ayant un corps de moteur (18) disposé circonférentiellement autour d'un axe longitudinal (14), le corps moteur (18) ayant une surface d'écoulement radialement intérieure (56), un capotage de soufflante (46) disposé circonférentiellement extérieurement, et concentriquement par rapport au corps de moteur (18), le capotage de soufflante (46) étant soumis étant soumis à des charges fonctionnelles pendant le fonctionnement du groupe motopropulseur à turboréacteur à double flux (12),
et une pluralité de bras traversants (64) s'étendant radialement entre la surface d'écoulement radialement inférieure (56) et le capotage de soufflante (46), ladite pluralité de bras (64) reliant le corps de moteur (18) et le capotage de soufflante (46) et transférant les charges de fonctionnement entre le corps de moteur (18) et le capotage de soufflante (46), caractérisé en ce que chacun desdits bras (64) comprend un joint de raccordement (72) ayant une position de contact et une position hors contact, chaque bras (64) comprenant :
une partie radialement intérieure (76) ayant une extrémité radialement intérieure, disposée sur le corps de moteur (18) et une extrémité radialement extérieure (86) ayant une première fixation d'adaptation (82);
une partie radialement extérieure (78) ayant une extrémité radialement extérieure, disposée sur le capotage de soufflante (46) et une extrémité (122) radialement intérieure ayant une deuxième fixation d'adaptation (84), ladite deuxième fixation d'adaptation (84) étant adaptée pour coopérer avec ladite première fixation d'adaptation (82) afin de transférer les charges de fonctionnement entre ladite partie extérieure (78) et ladite partie intérieure (76); et
des moyens (100) permettant de fixer de façon démontable ladite première fixation d'adaptation (82) et ladite deuxième fixation d'adaptation (84), lesdits moyens de fixation (100) ayant une partie en contact correspondant à la partie en contact dudit joint de raccordement (72) et une partie hors contact correspondant à ladite position hors contact dudit joint de raccordement (72);
dans lequel ladite partie radialement intérieure (76), en liaison avec le corps de moteur (78), comprend un premier module (188), ladite partie radialement extérieure (78) en liaison avec le capotage de soufflante (46) comprend un deuxième module (192), et dans lequel ladite partie hors contact dudit joint de raccordement (72) facilite la séparation entre ledit premier module (188) et ledit deuxième module (192), en permettant d'effectuer un déplacement relatif divergent dudit premier module (188) et dudit deuxième module (192) sur ledit axe longitudinal (14).

2. Le groupe motopropulseur à turboréacteur à double flux (12) selon la revendication 1, dans lequel ladite première fixation d'adaptation (82) comprend une première surface d'adaptation (88), ladite première surface d'adaptation (88) présente une première distance radiale définie par la séparation radiale définie entre l'axe (14) et ladite première surface d'adaptation (88), ladite deuxième fixation d'adaptation (84) comprend une deuxième surface d'adaptation (124), ladite deuxième surface d'adaptation (124) a une deuxième distance radiale définie par la séparation radiale entre l'axe (14) et ladite deuxième surface d'adaptation (124), et dans lequel, à l'état désassemblé, ladite deuxième distance radiale est supérieure à ladite première distance radiale et dans lequel, à l'état assemblé, lesdits bras traversants (64) ont une pré-contrainte en traction.

3. Le groupe motopropulseur à turboréacteur à double flux (12) selon la revendication 1, dans lequel ladite première fixation d'adaptation (82) comprend une surface d'adaptation plane (88) inclinée par rapport à l'axe (14), et dans lequel ladite pluralité de premières fixations d'adaptation (82) présente une surface à peu près conique, tournée radialement vers l'extérieur.

4. Le groupe motopropulseur à turboréacteur à double flux (12) selon la revendication 1, dans lequel ladite première fixation d'adaptation (82) a une pluralité de trous de boulons (94) disposés symétriquement autour dudit bras (64), ladite deuxième fixation d'adaptation (84) a une pluralité de trous de boulons (128) formés de façon à compléter les petits trous de boulons (94) de ladite première fixation d'adaptation (82), et dans lequel lesdits moyens de fixation (100) sont constitués d'une pluralité de boulons filetés (146) disposés à l'intérieur des trous de boulons (94, 128) et adaptés pour passer à travers lesdits trous de boulons (94) de la partie intérieure (76) et desdits trous de boulons (128) de ladite partie extérieure (78), une pluralité d'écrous taraudés (148) adaptée pour s'engager avec lesdits boulons filetés (146), dans lequel l'engagement entre lesdits boulons filetés (146) et lesdits écrous taraudés (148) provoquent la mise en contact de butée entre ladite première fixation d'adaptation (82) et ladite deuxième fixation d'adaptation (84).

5. Le groupe motopropulseur à turboréacteur à double flux (12) selon la revendication 4, comprenant en outre une pluralité de plaques d'écrous (152) configurées pour s'engager avec lesdits écrous taraudés (148) afin de capturer lesdits écrous (148), lesdites plaques d'écrous (152) étant disposées sur une surface (154) de ladite première fixation d'adaptation (82) par l'intermédiaire de l'engagement de boulonnage (156) s'exerçant avec ladite face tournée vers l'extérieur (154).

6. Le groupe motopropulseur à turboréacteur à double flux (12) selon la revendication 4, dans lequel ladite première fixation d'adaptation (82) a une pluralité de nervures (102), disposées entre les trous de boulons (94) symétriques et passant à travers ledit bras (64), et dans lequel ladite deuxième fixation d'adaptation (84) a une pluralité de nervures (136) disposées entre les trous de boulons symétriques (128) et passant à travers ledit bras (64).

7. Le groupe motopropulseur à turboréacteur à double flux (12) selon la revendication 1, dans lequel la première fixation d'adaptation (82) comporte une pluralité de trous d'alignement (96) et ladite deuxième fixation d'adaptation (84) comporte une pluralité correspondante de trous d'alignement (132), formée de façon à compléter lesdits trous d'alignement (94) de ladite première fixation d'adaptation (82), dans lequel lesdits trous d'alignement (96; 132) sont adaptés pour s'engager avec une barre en pied-de-biche, d'une manière permettant à ladite barre en pied-de-biche de déplacer ladite première fixation d'adaptation (82) par rapport à ladite deuxième fixation d'adaptation (84).

8. Le groupe motopropulseur à turboréacteur à double flux (12) selon la revendication 1, dans lequel ladite deuxième fixation d'adaptation (84) a un bord (114) tourné vers l'aval, ladite première fixation d'adaptation (82) a une lèvre (108), s'étendant radialement vers l'extérieur, ladite lèvre (108) ayant une surface (112) tournée vers l'amont, ladite surface (112) tournée vers l'amont étant adaptée pour s'engager, en contact de butée, avec le bord (114) tourné vers l'aval de ladite deuxième fixation d'adaptation (84).

9. Le groupe motopropulseur à turboréacteur à double flux (12) selon la revendication 8, dans lequel ladite lèvre (108) a une ouverture taraudée (116) s'étendant longitudinalement, ladite ouverture (116) étant adaptée pour s'engager avec un boulon à effet de vérin (118), dans lequel ledit boulon à effet de vérin (118) a une longueur suffisante pour permettre audit boulon à effet de vérin (118) de passer par ladite ouverture taraudée (116) et de s'engager avec le bord (114), tourné vers l'aval, de ladite deuxième fixation d'adaptation (84).

10. Le groupe motopropulseur à turboréacteur à double flux (12) selon la revendication 1, dans lequel ladite partie intérieure (76) est en outre constituée d'un noyau (79), s'étendant à travers le passage d'écoulement primaire (34) et a une section transversale de forme aérodynamique, et une partie intermédiaire (80), s'étendant depuis le carter extérieur moteur (28) jusqu'au joint de raccordement (72).

11. Le groupe motopropulseur à turboréacteur à double flux (12) selon la revendication 1, comprenant en outre une pluralité de panneaux anti-bruit (158), chaque panneau anti-bruit (158) étant disposé entre et relié à des parties extérieures (78) adjacentes, ladite pluralité de panneaux anti-bruit (158) étant adaptée pour former une surface d'écoulement (162) radialement intérieure pour ledit passage d'écoulement secondaire (54), lesdits panneaux anti-bruit (158) étant adaptés pour réduire l'énergie acoustique émise par le corps de moteur (18) et pour constituer un support structurel vis-à-vis des extrémités intérieures (112) desdites parties extérieures (78), et dans lequel ledit premier module (188) comprend ladite pluralité de panneaux anti-bruit (158).

12. Le groupe motopropulseur à turboréacteur à double flux (12) selon la revendication 4, dans lequel ladite première fixation d'adaptation (82) a une pluralité de découpes (98), ménagée entre des trous de boulons (94) adjacents, lesdites découpes (98) correspondant à des zones non pré-contraintes de ladite première fixation d'adaptation (82), lesdits boulons filetés (146) et lesdits écrous taraudés (148) étant engagés.

13. Le groupe motopropulseur à turboréacteur à double flux (12) ayant un axe (14) s'étendant longitudinalement, ledit groupe (12) étant constitué de:
un corps de moteur (18) comprenant un compresseur basse pression (29) et un compresseur haute pression (30), en aval du premier compresseur, et est disposé circonférentiellement autour de l'axe (14), ledit corps de moteur (18) ayant un carter (28) radialement extérieur et une plate-forme intérieure (32) espacée radialement vers l'intérieur vis-à-vis dudit carter extérieur (28), en laissant un passage d'écoulement primaire (24) annulaire entre eux, passage adapté pour permettre l'écoulement d'un gaz dans ledit corps de moteur (18);
un ensemble de soufflante (22) comprenant une pluralité d'aubes de soufflante (44) et un capotage de soufflante (46) disposé circonférentiellement à l'extérieur et concentriquement par rapport audit corps de moteur (18), ledit ensemble de soufflante (22) définissant un passage d'écoulement secondaire (26) annulaire adapté pour permettre l'écoulement d'un gaz dans ledit ensemble de soufflante (22);
un carter intermédiaire (62) disposé circonférentiellement autour de l'axe (14) et disposé axialement entre ledit compresseur basse pression (29) et ledit compresseur haute pression (30), ledit carter intermédiaire (62) comprenant un anneau extérieur (66) fixé audit capotage de soufflante (46) et une pluralité de bras traversants (64) s'étendant radialement entre eux reliant ladite plate-forme intérieure (32) et ledit anneau extérieur (36), lesdits bras traversants (64) étant adaptés pour transférer les charges de fonctionnement entre ledit capotage de soufflante (66) et ledit corps de moteur (18), chacun desdits bras (64) ayant un axe d'envergure (68) s'étendant radialement depuis l'axe central (14), chaque bras (64) étant creux et circonférentiellement continu autour de l'axe d'envergure (68), chaque bras (64) ayant un joint de raccordement (72) disposé entre ledit carter extérieur (28) et ledit capotage de soufflante (46), caractérisé en ce que chacun desdits bras (64) comprend :
une partie radialement intérieure (76), s'étendant entre ladite plate-forme intérieure (32) et ledit joint de raccordement (72), comprenant une extrémité radialement extérieure (86) ayant une première fixation d'adaptation (82), ladite première fixation d'adaptation (82) comprenant une première surface d'adaptation (88) et une bride de joint de raccordement (92) disposée autour du périmètre de ladite extrémité extérieure (86), ladite première surface d'adaptation (88) définissant un plan qui est incliné par rapport à l'axe (14) et ayant, à l'état démonté, une première distance radiale définie par la séparation entre l'axe central (14) et ladite première surface d'adaptation (88) sur l'axe d'envergure (68), ladite première fixation d'adaptation (82) ayant une pluralité de trous de boulons (94), disposée autour d'un plan défini par l'axe d'envergure (68) du bras (64) et l'axe central (14), une pluralité de nervures (102) étant disposée entre des trous des boulons (94) symétriques et passant à travers ledit bras creux (64), une pluralité de trous d'alignement (96) et une lèvre (108) s'étendant radialement à l'extérieur;
une partie radialement extérieure (78) franchissant le passage d'écoulement secondaire (26) et ayant une section transversale aérodynamique, ladite partie extérieure (70) comprenant une extrémité radialement extérieure montée sur ledit anneau extérieur (66) et une extrémité radialement intérieure (122) située sur ledit joint de raccordement (72), ladite extrémité intérieure (122) ayant une deuxième fixation d'adaptation (84), ladite deuxième fixation d'adaptation (84) comprenant une deuxième surface d'adaptation (124) et une bride de joint de raccordement (126) disposée autour du périmètre de ladite extrémité intérieure (122), ladite deuxième surface d'adaptation (126) ayant, à l'état démonté, une deuxième distance radiale définie par la séparation entre l'axe central (14) et ladite deuxième surface d'adaptation (124) sur l'axe d'envergure (68), ladite deuxième fixation d'adaptation (84) étant adaptée pour compléter ladite première surface d'adaptation (82), ladite deuxième surface d'adaptation (84) ayant une pluralité de trous de boulons (128) formée pour compléter lesdits trous de boulons (94) de ladite première surface d'adaptation (82), une pluralité de nervures (116), disposées entre des trous de boulons (128) symétriques et passant à travers ledit bras (64), et une pluralité de trous d'alignement (132) formée pour compléter lesdits trous d'alignement (96) de ladite première fixation d'adaptation (82), et dans lequel, à l'état démonté, ladite deuxième distance radiale est supérieure à ladite première distance radiale, de manière qu'un interstice (145) soit défini par la séparation radiale;
une pluralité de boulons filetés (146) disposée dans les trous de boulons (94; 128) et adaptée pour passer à travers lesdits trous de boulons (94) de ladite partie intérieure (76) et lesdits trous de boulons (128) de ladite partie extérieure (78);
une pluralité d'écrous taraudés (148) adaptée pour s'engager avec lesdits boulons filetés (146), dans lequel l'engagement entre lesdits boulons filetés (146) et lesdits écrous taraudés (148) provoque un contact de mise en butée entre ladite première surface d'adaptation (88) et ladite deuxième surface d'adaptation (124);
une pluralité de plaques d'écrous (152) configurée pour s'engager avec lesdits écrous taraudés (148) afin de capturer lesdits écrous (148), lesdites plaques d'écrous (152) étant disposées sur la surface (154) radialement intérieure de ladite première fixation d'adaptation (82), par l'intermédiaire de l'engagement de boulonné (156) avec ladite face intérieure (154);
et une pluralité de panneaux anti-bruit (158), chaque panneau anti-bruit (158) étant disposé et relié à des parties extérieures (78) adjacentes, ladite pluralité de panneaux anti-bruit (158) étant adaptée pour former une surface d'écoulement radialement intérieure pour ledit passage d'écoulement secondaire (54), lesdits panneaux anti-bruit (158) étant adaptés pour réduire l'énergie acoustique émise par le groupe motopropulseur (12) et pour offrir un support structurel aux extrémités intérieures (122) desdites parties extérieures (78);
une pluralité de raccords moulés (164), disposée autour des extrémités intérieures (122) de chaque partie extérieure (78); chacun desdits raccords moulés (164) étant adapté pour offrir une couverture aérodynamique radialement extérieure à la jonction entre lesdites parties extérieures (76) et lesdits panneaux anti-bruit (158);
dans lequel ledit corps moteur (18), ledit carter intermédiaire (62) et ladite partie intérieure (76) comprennent un premier module (188) et dans lequel ledit capotage de soufflante (46), lesdits panneaux anti-bruit (158) et ladite partie radialement extérieure (78) comprennent un deuxième module (192); et dans lequel la désolidarisation entre lesdits écrous taraudés (148) et lesdits boulons filetés (146) facilite la séparation axiale entre ledit premier module (188) et ledit deuxième module (192), en permettant audit module (188; 192) d'effectuer un déplacement relatif divergent sur ledit axe central (14).

14. Un procédé d'assemblage et de démontage d'un groupe motopropulseur à turboréacteur à double flux (12), le groupe motopropulseur à turboréacteur à double flux (12) comprenant un corps de moteur (18) disposé circonférentiellement autour d'un axe central (14) longitudinal, le capotage de soufflante (46) disposé circonférentiellement autour du, et concentriquement au, corps de moteur (18), une pluralité de bras (64) s'étendant radialement reliant le capotage de soufflante (46) au corps de moteur (18), chacun des bras (64) ayant une partie intérieure (76) et une partie extérieure (78), la partie intérieure (76) et la partie extérieure (78) étant couplée en un joint de raccordement (72) ayant une position engagée et une position désengagée, dans lequel un premier module (188) est constitué du corps de moteur (18) et de la partie intérieure (76) et un deuxième module (192) est constitué du capotage de soufflante (46) et de la partie extérieure (78), le procédé comprenant les étapes consistant à :
(a) manipuler les joints de raccordement (72) entre la position engagée et la position désengagée;
(b) déplacer axialement le premier module (188) par rapport au deuxième module (192), dans l'axe central (14) longitudinal.

15. Un groupe motopropulseur à turboréacteur à double flux (12) ayant un corps de moteur (216) disposé de façon annulaire autour d'un axe longitudinal (14) passant à travers lui, un carter de soufflante (218) coaxial, disposé radialement extérieurement par rapport au corps de moteur (216) et une pluralité de bras support de charge (210) s'étendant radialement, disposés circonférentiellement entre eux, caractérisé en ce que chaque bras (210) comprend :
une partie (220) radialement intérieure et une partie (240) radialement extérieure, les parties (220; 240) ayant un bord de fuite (234; 254) aval sensiblement contigu axialement; dans lequel une extrémité radialement intérieure (222) de la partie intérieure (220) est fixée au corps de moteur (216) et dans lequel une extrémité radialement extérieure (242) de la partie extérieure (240) est fixée au carter de soufflante (218); et
une languette (226) s'étendant axialement, disposée sur une extrémité (224) radialement extérieure de la partie intérieure (22), en contact de coulissement avec une rainure (244) correspondante s'étendant axialement, ménagée sur une extrémité (244) radialement extérieure de partie extérieure (240).

16. La turbomachine (12) selon la revendication 15, dans laquelle le bras (210) est en outre caractérisé par :
une première bride (236) s'étendant radialement, disposée sur la languette (226), à proximité du bord de fuite (234) de la partie intérieure (220),
une deuxième bride (256) s'étendant radialement, disposée à proximité du bord de fuite (254) de la partie extérieure (240), et un moyen (256) pour fixer de façon amovible lesdites première et deuxième brides (236; 256) lorsque la languette (226) et la rainure (246) sont complètement engagées.

17. La turbomachine (12) selon la revendication 15 ou 16, dans laquelle le bras (210) est caractérisé par:
une languette (226) s'étendant axialement, disposée sur une extrémité (224) radialement extérieure de la partie intérieure (220) en contact de coulissement avec une rainure (246) correspondante s'étendant axialement, ménagée sur l'extrémité radialement intérieure (244) de la partie extérieure (240),
un contour (230) s'étendant axialement, se projetant radialement à l'extérieur, disposé sur la languette (226), et
une cannelure (250) s'étendant axialement, disposée dans l'extrémité radialement extérieure (244) de la partie de bras extérieur (240), dans lequel le contour (230) s'emboîte avec la cannelure (250) lorsque lesdites parties (220; 240) sont reliées sur la corde du bras (210) à peu près à la demi-envergure du bras.

18. La turbomachine (12) selon l'une quelconque des revendications 15, 16 ou 17, dans laquelle le bras (210) est en outre caractérisé par une surface aérodynamique disposée sur les parties (220; 240).
